# EUROPÄISCHE PATENTANMELDUNG

(11) **EP 1 034 827 A1**
(43) Veröffentlichungstag der Anmeldung: **13.09.2000**
(21) Anmeldenummer: 99810200.8
(22) Anmeldetag: 08.03.1999
(51) Int. Cl.: B01D 19/00

(54) **Entgasungsvorrichtung**

(71) Anmelder: Stücklin & Cie AG, 4414 Füllinsdorf (CH)
(72) Erfinder: Steffan, Helmut, 79576 Weil am Rhein (DE)
(74) Vertreter: Bollhalder, Renato

(57) **Zusammenfassung**

Eine Entgasungsvorrichtung umfasst ein Gefäss (1), das einen Gasauslass (11) und einen Gas- und Flüssigkeitsdurchlass (12) aufweist. Der Gas- und Flüssigkeitsdurchlass (12) ist über eine Gas- und Flüssigkeitsleitung (20) mit einem Entgasungsbehälter (7) eines Druckstufenentgasers verbunden, wobei in der Gas- und Flüssigkeitsleitung (20) ein verschliessbares Ventil (2) angeordnet ist. Das Ventil (2) wird durch eine Steuereinheit (8) gesteuert, die Signale von einem Flüssigkeitsstandsschalter in Form eines Schwimmerschalters (3) empfängt. Der Schwimmerschalter (3) umfasst eine Stange (32), in der ein Magnetschalter angeordnet ist, und um die Stange (32) herum einen in der Höhe beweglichen magnetischen Schwimmer (31). Der Magnetschalter sendet ein Signal an die Steuereinheit (8), sobald der Schwimmer (31) bei steigendem Flüssigkeitsspiegel ihn erreicht. Auf dieses Signal hin schliesst die Steuereinheit (8) das Ventil (2). Mit der Entgasungsvorrichtung kann ein Austreten von Flüssigkeit über den Gasauslass (11) wirkungsvoll verhindert werden, ohne dass dabei Dichtigkeitsprobleme auftreten.

## Beschreibung

Die vorliegende Erfindung bezieht sich auf eine Entgasungsvorrichtung, wie sie im Oberbegriff des unabhängigen Patentanspruchs 1 definiert ist, sowie auf ein Verfahren zur Entgasung eines Entgasungsbehälters mittels einer derartigen Entgasungsvorrichtung.

Entgasungsvorrichtungen mit einem Gefäss, das in seinem oberen Endbereich einen Gasauslass und in seinem unteren Endbereich einen Gas- und Flüssigkeitsdurchlass aufweist, werden beispielsweise dazu verwendet, bei einem Druckstufenentgaser während der Entgasung von Flüssigkeit in einem Entgasungsbehälter freigesetztes Gas in die Aussenluft auszuscheiden. Hierzu wird die Entgasungsvorrichtung oben am Entgasungsbehälter angebracht, so dass mittels Druckerhöhung im Entgasungsbehälter freies Gas durch den Gas- und Flüssigkeitsdurchlass hindurch in das Gefäss der Entgasungsvorrichtung und dann über den Gasauslass aus diesem heraus gedrückt werden kann.

In der WO 97/14922 ist ein Beispiel einer derartigen an einem Entgasungsbehälter angebrachten Entgasungsvorrichtung beschrieben, die ein Schwimmerventil, ein Rückschlagventil und eine Blende umfasst. Sobald der Flüssigkeitsspiegel im Gefäss der Entgasungsvorrichtung ein bestimmtes Niveau erreicht, wird der Gasauslass durch das Schwimmerventil geschlossen, so dass keine Flüssigkeit austreten kann. Daraufhin kann ein neuer Entgasungszyklus mit der Erzeugung von Unterdruck im Entgasungsbehälter beginnen, wodurch Gas aus der Flüssigkeit im Entgasungsbehälter freigesetzt wird. Gleichzeitig fliesst die im Gefäss der Entgasungsvorrichtung vorhandene Flüssigkeit wieder in den Entgasungsbehälter zurück, der Schwimmer senkt sich und der Gasauslass öffnet sich.

Eine Entgasungsvorrichtung mit einem Gefäss, das in seinem unteren Endbereich einen Gas- und Flüssigkeitsdurchlass und in seinem oberen Endbereich einen Gasauslass aufweist, der mittels eines Schwimmerventils geschlossen und geöffnet wird, ist ausserdem aus der CH-A-660 220 bekannt.

Die erwähnten Entgasungsvorrichtungen des Standes der Technik haben den Nachteil, dass sie mit der Zeit nicht mehr richtig dicht sind, wenn der Ventilsitz benetzt wird. Dies ist darauf zurückzuführen, dass der Ventilsitz federbelastet ist und nur kleine Schliesskräfte erzeugt werden. Ein Nasswerden des Ventilsitzes kann zumindest bei Druckstufenentgasern kaum verhindert werden, da dort bei ca. 40-50 °C Wasserdampf vorhanden ist.

Ein zweites bei der Druckstufenentgasung auftretendes Problem besteht darin, dass bei der Unterdruckerzeugung im Entgasungsbehälter das im Gefäss der Entgasungsvorrichtung noch vorhandene Gaspolster, das nicht in die Aussenluft ausgeschieden worden ist, sich um ein Mehrfaches ausdehnt und bis in den Entgasungsbehälter vordringt. Dadurch wird dort vorhandene Flüssigkeit in die Anlage, beispielsweise Heizanlage, an der der Entgasungsbehälter angeschlossen ist, gedrückt. Diese zusätzliche Flüssigkeit in der Anlage führt zu einer unerwünschten Druckerhöhung in der Anlage.

Angesichts der Nachteile der bisher bekannten, oben beschriebenen Entgasungsvorrichtungen liegt der Erfindung die folgende Aufgabe zugrunde. Zu schaffen ist eine Entgasungsvorrichtung der eingangs erwähnten Art, die ein Ausscheiden von Gas ermöglicht, aber ein Austreten von Flüssigkeit weitgehend verhindert, wobei keine Dichtigkeitsprobleme auftreten sollen. Ausserdem soll sie ein Rückströmen von Gas ausschliessen.

Diese Aufgabe wird durch die erfindungsgemässe Entgasungsvorrichtung gelöst, wie sie im unabhängigen Patentanspruch 1 definiert ist. Patentanspruch 8 bezieht sich auf ein Verfahren zur Entgasung eines Entgasungsbehälters mittels einer derartigen Entgasungsvorrichtung. Bevorzugte Ausführungsvarianten ergeben sich aus den abhängigen Patentansprüchen.

Das Wesen der Erfindung besteht darin, dass eine Entgasungsvorrichtung mit einem Gefäss, das in seinem oberen Endbereich einen Gasauslass und in seinem unteren Endbereich einen Gas- und Flüssigkeitsdurchlass aufweist, eine in den Gas- und Flüssigkeitsdurchlass mündende Gas- und Flüssigkeitsleitung umfasst, in der ein verschliessbares Ventil angeordnet ist, und einen Flüssigkeitsstandsschalter, der bei Erreichen eines bestimmten Flüssigkeitsstands im Gefäss das Verschliessen des Ventils bewirkt.

Da bei Erreichen eines bestimmten Flüssigkeitsstands im Gefäss die Flüssigkeitszufuhr zum Gefäss durch das Verschliessen des Ventils in der Gas- und Flüssigkeitsleitung unterbrochen wird, wird ein Austreten von Flüssigkeit über den Gasauslass wirkungsvoll verhindert, ohne dass dabei Dichtigkeitsprobleme auftreten. Durch Verschliessen des Ventils kann ausserdem verhindert werden, dass Gas aus dem Gefäss der Entgasungsvorrichtung über den Gas- und Flüssigkeitsdurchlass und die Gas- und Flüssigkeitsleitung zurückströmt, z.B. in einen Entgasungsbehälter eines Druckstufenentgasers.

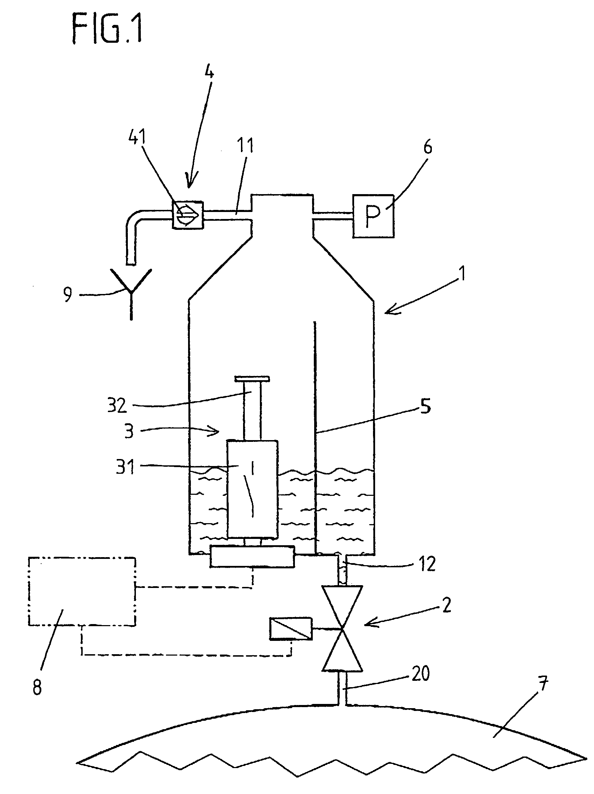

Im folgenden wird die erfindungsgemässe Entgasungsvorrichtung unter Bezugnahme auf die beigefügte Zeichnung anhand eines Ausführungsbeispiels detaillierter beschrieben. Fig. 1 zeigt schematisch eine an einem Entgasungsbehälter eines Druckstufenentgasers angebrachte erfindungsgemässe Entgasungsvorrichtung.

Die dargestellte Entgasungsvorrichtung umfasst ein Gefäss 1, das in seinem oberen Endbereich einen Gasauslass 11 und in seinem unteren Endbereich einen Gas- und Flüssigkeitsdurchlass 12 aufweist. Der Gas- und Flüssigkeitsdurchlass 12 ist über eine Gas- und Flüssigkeitsleitung 20 mit dem Entgasungsbehälter 7 des Druckstufenentgasers verbunden, wobei in der Gas- und Flüssigkeitsleitung 20 ein verschliessbares Ventil 2, insbesondere ein Magnetventil, angeordnet ist. Das Ventil 2 wird durch eine Steuereinheit 8 gesteuert, die Signale von einem Flüssigkeitsstandsschalter in Form eines Schwimmerschalters 3 empfängt. Der Schwimmerschalter 3 umfasst eine Stange 32, in der ein Magnetschalter angeordnet ist, und um die Stange 32 herum einen in der Höhe beweglichen magnetischen Schwimmer 31. Der Magnetschalter sendet ein Signal an die Steuereinheit 8, sobald der in der Flüssigkeit im Gefäss 1 schwimmende Schwimmer 31 bei steigendem Flüssigkeitsspiegel ihn erreicht. Auf dieses Signal hin schliesst die Steuereinheit 8 das Ventil 2.

Das Ausscheiden des Gases, insbesondere Luft, im Gefäss 1 erfolgt über den Gasauslass 11, in dem ein Rückschlagventil 4 als Sicherheitsventil angeordnet ist. Allfällige ausgeschiedene Flüssigkeitstropfen, die aus im Gefäss 1 aufsteigendem Dampf entstehen, werden von einem Abfluss 9 aufgenommen. Durch das Rückschlagventil 4 verläuft ein Gaskanal 41 mit einem im Vergleich zum Gasauslass 11 kleinen Öffnungsquerschnitt von vorzugsweise zwischen 0,5 und 1,5 mm, durch den permanent Gas aus dem Gefäss 1 ausströmen kann. Wird der Druck im Gefäss 1 zu gross, wird das Rückschlagventil 4 offen gedrückt und eine grössere Gasmenge kann entweichen. Im geschlossenen Zustand verhindert das Rückschlagventil 4 ein Zurückströmen von grösseren Mengen von Gas in das Gefäss 1, da nur der Gaskanal 41 offen bleibt.

Innerhalb des Gefässes 1 ist zwischen dem Schwimmerschalter 3 und dem Gas- und Flüssigkeitsdurchlass 12 eine Wand 5 angeordnet, die ein direktes Bespritzen des Schwimmers 31 durch einströmende Flüssigkeit verhindert. Dadurch werden Fehlschaltungen aufgrund eines kurzfristig nach oben gedrückten Schwimmers 31 vermieden.

Die Entgasungsvorrichtung weist im weiteren eine Einrichtung 6 zur Bestimmung der aus dem Gefäss 1 ausgeschiedenen Gasmenge auf, die hier als Druckschalter ausgebildet ist, der auf einen bestimmten, einstellbaren Gasdruck, z.B. 30 mbar, reagiert. Über die Zeit, während der der Druckschalter anspricht, kann die durch den Gasauslass 11 strömende Gasmenge berechnet werden. Als Druckschalter kann beispielsweise ein Druckwächter 901.62 Prescal® der Beck GmbH, D-70745 Leinfelden, verwendet werden.

Bei der Druckstufenentgasung wird dem Entgasungsbehälter 7 zunächst Flüssigkeit zugeführt, dann im Entgasungsbehälter 7 ein Unterdruck erzeugt, so dass in der Flüssigkeit gelöstes Gas frei wird und in den oberen Teil des Entgasungsbehälters 7 sowie die Gas- und Flüssigkeitsleitung 20 aufsteigt. Danach wird im Entgasungsbehälter 7 Druck erzeugt und das Ventil 2 geöffnet, so dass das freie Gas über die Gas- und Flüssigkeitsleitung 20 in das Gefäss 1 der Entgasungsvorrichtung gedrückt und von dort aus über den Gasauslass 11 ausgeschieden wird. Das Ventil 2 wird wieder geschlossen, wenn ebenfalls in das Gefäss 1 eindringende Flüssigkeit in diesem einen bestimmten Stand erreicht und so eine Schaltung des Schwimmerschalters 3 auslöst. Auf diese Weise wird vermieden, dass sich das Gefäss 1 zu stark mit Flüssigkeit füllt, und gewährleistet, dass höchstens Kondensflüssigkeit über den Gasauslass 11 ausgeschieden wird.

Zur Senkung des Flüssigkeitsstands im Gefäss 1 wird schliesslich das Ventil 2 wieder geöffnet, während im Entgasungsbehälter 7 ein Unterdruck für den nächsten Entgasungszyklus erzeugt wird.

Zu der vorbeschriebenen Entgasungsvorrichtung sind weitere konstruktive Variationen realisierbar. Hier ausdrücklich erwähnt seien noch:
- Anstelle des Rückschlagventils 4 mit Gaskanal 41 kann im Gasauslass 11 auch nur der Gaskanal 41 alleine bzw. eine Düse oder Blende angeordnet sein und ein Rückschlagventil oder ein anderes Sicherheitsventil kann an einer anderen Stelle am Gefäss 1 vorhanden sein.
- Der Flüssigkeitsstandsschalter kann alternativ beispielsweise auch als eine auf Flüssigkeitskontakt reagierende Sonde, insbesondere Elektrode, ausgebildet sein, die in das Gefäss 1 hineinragt und ein Signal erzeugt, sobald die Flüssigkeit im Gefäss 1 sie erreicht.
- Es ist auch denkbar, die Messung der ausgeschiedenen Gasmenge über die Zeitdifferenz zwischen der Öffnung des Ventils 2 und des Ansprechens des Schwimmerschalters 3 zu berechnen.

## Patentansprüche

1. Entgasungsvorrichtung mit einem Gefäss (1), das in seinem oberen Endbereich einen Gasauslass (11) und in seinem unteren Endbereich einen Gas- und Flüssigkeitsdurchlass (12) aufweist, gekennzeichnet durch eine in den Gas- und Flüssigkeitsdurchlass (12) mündende Gas- und Flüssigkeitsleitung (20), in der ein verschliessbares Ventil (2) angeordnet ist, und einen Flüssigkeitsstandsschalter (3), der bei Erreichen eines bestimmten Flüssigkeitsstands im Gefäss (1) das Verschliessen des Ventils (2) bewirkt.

2. Entgasungsvorrichtung nach Anspruch 1, dadurch gekennzeichnet, dass im Gasauslass (11) ein Rückschlagventil (4) angeordnet ist, das zumindest weitgehend verhindert, dass Gas über den Gasauslass (11) in das Gefäss (1) strömt, und das sich ab einem gewissen Druck im Gefäss (1) öffnet.

3. Entgasungsvorrichtung nach Anspruch 1 oder 2, dadurch gekennzeichnet, dass im oberen Endbereich des Gefässes (1), insbesondere durch das Rückschlagventil (4) hindurch, ein Gaskanal (41) mit einem im Vergleich zum Gasauslass (11) kleinen Öffnungsquerschnitt verläuft, durch den Gas aus dem Gefäss (1) ausströmen kann.

4. Entgasungsvorrichtung nach einem der Ansprüche 1 bis 3, dadurch gekennzeichnet, dass der Flüssigkeitsstandsschalter (3) ein Schwimmerschalter (3) ist, der einen in der Höhe beweglichen Schwimmer (31) und ein ortsfestes Teil umfasst, wobei ein Signal erzeugt wird, sobald der Schwimmer (31) eine bestimmte Stelle des ortsfesten Teils erreicht.

5. Entgasungsvorrichtung nach Anspruch 4, dadurch gekennzeichnet, dass das ortsfeste Teil durch eine Stange (32) gebildet ist, in oder an der ein Magnetschalter angeordnet ist, und der Schwimmer (31) magnetisch und um die Stange (32) herum angeordnet ist.

6. Entgasungsvorrichtung nach einem der Ansprüche 1 bis 3, dadurch gekennzeichnet, dass der Flüssigkeitsstandsschalter eine auf Flüssigkeitskontakt reagierende Sonde, insbesondere Elektrode, umfasst, die in das Gefäss (1) hineinragt und ein Signal erzeugt, sobald die Flüssigkeit im Gefäss (1) sie erreicht.

7. Entgasungsvorrichtung nach einem der Ansprüche 1 bis 6, dadurch gekennzeichnet, dass im Gefäss (1) zwischen dem Flüssigkeitsstandsschalter (3) und dem Gas- und Flüssigkeitsdurchlass (12) eine Wand (5) angeordnet ist.

8. Entgasungsvorrichtung nach einem der Ansprüche 1 bis 7, dadurch gekennzeichnet, dass sie eine Einrichtung (6) zur Bestimmung der aus dem Gefäss (1) ausgeschiedenen Gasmenge aufweist.

9. Verfahren zur Entgasung eines Entgasungsbehälters (7) mittels einer Entgasungsvorrichtung nach einem der Ansprüche 1 bis 8, deren Gas- und Flüssigkeitsleitung (20) am Entgasungsbehälter (7) angeschlossen ist, dadurch gekennzeichnet, dass das Ventil (2) der Entgasungsvorrichtung geöffnet und im Entgasungsbehälter (7) Druck erzeugt wird, so dass dort vorhandenes freies Gas über die Gas- und Flüssigkeitsleitung (20) in das Gefäss (1) der Entgasungsvorrichtung gedrückt und von dort aus ausgeschieden wird, und das Ventil (2) geschlossen wird, wenn ebenfalls in das Gefäss (1) eindringende Flüssigkeit in diesem einen bestimmten Stand erreicht.

10. Verfahren nach Anspruch 9, dadurch gekennzeichnet, dass zur Senkung des Flüssigkeitsstands im Gefäss (1) der Entgasungsvorrichtung das Ventil (2) geöffnet und im Entgasungsbehälter (7) ein Unterdruck erzeugt wird.
